(19) Europäisches Patentamt

European Patent Office

Office européen des brevets

(11) **EP 0 992 105 B1**

(12) **FASCICULE DE BREVET EUROPEEN**

(45) Date de publication et mention
de la délivrance du brevet:
**03.12.2003 Bulletin 2003/49**

(51) Int Cl.$^7$: **H02M 7/5387**

(21) Numéro de dépôt: **98935062.4**

(22) Date de dépôt: **30.06.1998**

(86) Numéro de dépôt international:
**PCT/FR98/01390**

(87) Numéro de publication internationale:
**WO 99/001925 (14.01.1999 Gazette 1999/02)**

(54) **PROCEDE ET DISPOSITIF DE COMMANDE DE COMMUTATEURS DANS UN SYSTEME DE COMMANDE A STRUCTURE VARIABLE, A FREQUENCE CONTROLABLE**

VERFAHREN UND VORRICHTUNG ZUR STEUERUNG DER SCHALTER IN EINEM STEUERSYSTEM MIT VARIABELER STRUKTUR UND STEUERBARER FREQUENZ

METHOD AND DEVICE FOR CONTROLLING SWITCHES IN A CONTROL SYSTEM WITH VARIABLE STRUCTURE, WITH CONTROLLABLE FREQUENCY

(84) Etats contractants désignés:
**BE CH DE ES FR GB IT LI**

(30) Priorité: **01.07.1997 FR 9708548**

(43) Date de publication de la demande:
**12.04.2000 Bulletin 2000/15**

(73) Titulaire: **Ecole Superieure Atlantique d'Ingenieurs en Genie Electrique esa IGELEC 44603 Saint Nazaire Cedex (FR)**

(72) Inventeurs:
• **LE CLAIRE, Jean-Claude**
**F-44600 Saint Nazaire (FR)**
• **SAILLARD, Joseph**
**F-44800 Saint Herblain (FR)**
• **SIALA, Sami**
**F-44600 Saint Nazaire (FR)**
• **LE DOEUFF, René**
**F-44600 Saint Nazaire (FR)**

(74) Mandataire: **Laget, Jean-Loup et al Cabinet Brema, 78, avenue Raymond Poincaré 75116 Paris (FR)**

(56) Documents cités:
**US-A- 5 543 753**

• **RASHIDI N H: "IMPROVED AND LESS LOAD DEPENDENT THREE-PHASE CURRENT-CONTROLLED INVERTER WITH HYSTERETIC CURRENT CONTROLLERS" IEEE TRANSACTIONS ON INDUSTRIAL ELECTRONICS, vol. 42, no. 3, 1 juin 1995, pages 325-330, XP000506394**
• **NABAE A ET AL: "A NOVEL INVERTER WITH SINUSOIDAL VOLTAGE AND CURRENT OUTPUT" IEEE INDUSTRY APPLICATIONS SOCIETY ANNUAL MEETING, vol. 1, 9 octobre 1992, pages 867-871, XP000368886**

**Description**

Le domaine de l'invention est celui de la modulation d'impulsions. Plus précisément, l'invention concerne le contrôle de la fréquence et de la largeur d'impulsions de commande d'interrupteurs, et notamment d'interrupteurs de puissance. Son domaine d'application est en particulier celui des systèmes de commande à structure variable (commande par hystérésis, commande directe de couple (en angle DTC : "Direct Torque Control")) et des modulations à largeur et/ou fréquence d'impulsions (MLI).

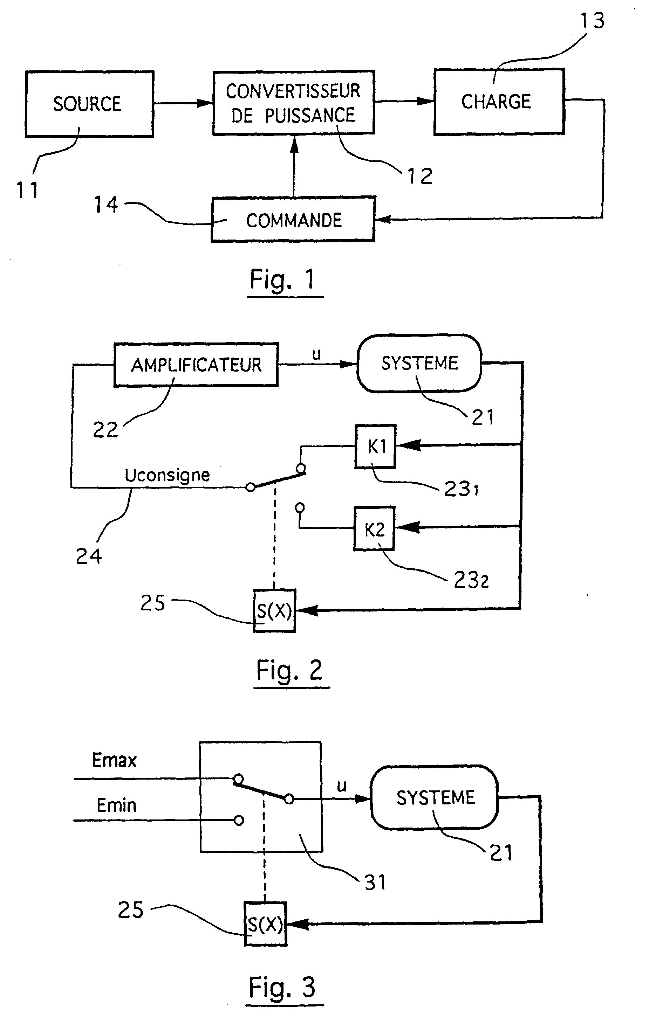

Les dispositifs électriques modernes sont composés principalement des quatre modules représentés sur la figure 1.

La source 11 peut être continue, alternative monophasée ou triphasée. Le convertisseur de puissance 12 assure la fonction d'adaptation de la source au type d'alimentation nécessaire au bon fonctionnement de la charge 13 :

- source continue constante transformée en source alternative monophasée à fréquence et amplitude variables ;
- source alternative triphasée transformée en source continue à amplitude variable ;
- etc.

La gestion de cette conversion de type de source est assurée par le module commande 14. Ce module intègre en général deux fonctions :

- asservissement (ou régulation) d'une ou plusieurs grandeurs de la charge,
- conversion des sorties des régulateurs en signaux de commande des interrupteurs de puissance.

Les systèmes de commande à structure variable sont de plus en plus utilisés, par rapport aux commandes classiques. Cette technique est également connue sous le nom de commande par mode de glissement ou commande directe du couple (en anglais DTC ; "Direct Torque Control").

On peut distinguer deux grands types de systèmes de commande à structure variable, illustrés respectivement par les figures 2 et 3.

La figure 2 illustre le cas d'un changement de structure par commutation d'une contre-réaction d'état. Le système électrique 21 reçoit la tension d'un amplificateur 22 piloté par une tension de consigne délivrée par l'un ou l'autre des modules K1 et K2 ($23_1$ et $23_2$), en fonction du commutateur 24 contrôlé par la loi de commutation S(x)25.

La figure 3 présente quant à elle le cas d'un changement de structure par commutation au niveau de l'amplificateur (convertisseur de puissance). La loi de commutation S(x) commande alors le commutateur 31, qui délivre la tension $E_{max}$ ou $E_{min}$ sélectionnée.

La loi de commutation S(x) est déduite, à partir d'une relation entre la consigne et les variables d'état du système, de façon à assurer la stabilité, la robustesse et le suivi de la consigne, soit :

$$u = E_{max} \text{ si } S(x) > 0$$

$$u = E_{min} \text{ si } S(x) < 0$$

Cette commande présente l'avantage d'une dynamique très rapide et d'une très bonne robustesse aux variations paramétriques. Il est possible que la commutation ait lieu à une fréquence très élevée (théoriquement infiniment élevée) de sorte que le système travaille en mode de glissement.

Cet aspect se révèle cependant être un inconvénient majeur en pratique. En effet, il n'y a pas de contrôle de la fréquence qu'impose ce type de commande aux interrupteurs du convertisseur statique 12 qui alimente le système électrique. Ces fréquences peuvent, dans certains cas, être néfastes au convertisseur statique.

Ce problème est bien connu. De nombreuses méthodes visant à le résoudre ont déjà été proposées :

- remplacer les relais de sorties du régulateur par des hystérésis, avec une bande calculée en fonction des paramètres du système, associés à des systèmes de commande de la largeur de la bande d'hystérésis en fonction du point de fonctionnement ;
- ajouter un estimateur auxiliaire et un régulateur de la fréquence de commutation. Des paramètres de ce "contrôleur de f réquence" sont calculés en fonction des paramètres du système à commander ;
- décomposer le régulateur "à structure variable" en deux sous-régulateurs : l'un est déduit pour une linéarisation du modèle du système à commander et le deuxième est une image du régulateur de base. Il impose la dynamique en boucle fermée et la robustesse pour des faibles variations paramétriques.

Par ailleurs, dans le cas de la régulation des courants d'un moteur triphasé à courant alternatif, il existe deux solutions typiques, la commande par MLI (modulation de largeur d'impulsions) et la commande par hystérésis.

La source est de type tension continue (c'est-à-dire de valeur moyenne non nulle, par opposition à une tension alternative), la charge est un moteur synchrone ou asynchrone triphasé et le convertisseur de puissance est un onduleur de tension triphasé (conversion d'une tension continue constante en trois tensions alternatives à fréquence et amplitude variables). Le module de commande doit asservir les courants du moteur à trois références alternatives, par exemple sinusoïdales.

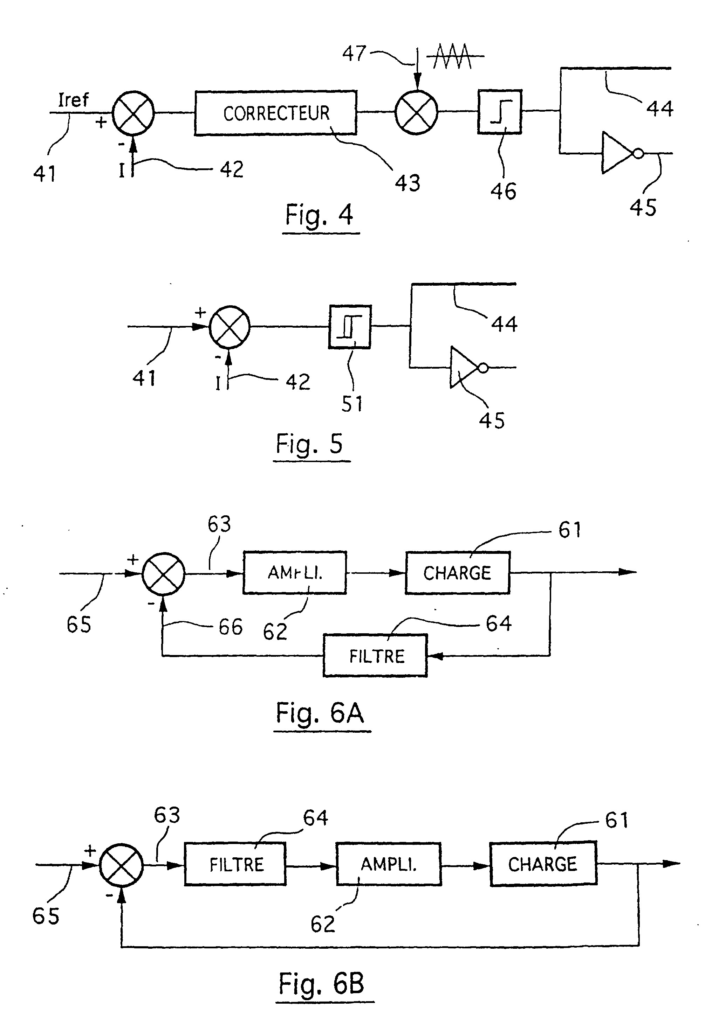

Le principe de la commande par MLI est donné sur la figure 4.

L'erreur entre le courant référencé 41 et le courant mesuré 42 est traitée par un correcteur 43. La commande des interrupteurs de puissance 44 et 45 est obtenue par la comparaison 46 de la sortie du régulateur 43 et d'un signal triangulaire 47 de fréquence très élevée par rapport à celle des courants de référence (40 à 100 fois, voire plus).

Ce type de commande assure une commutation des interrupteurs de puissance à une fréquence constante (fréquence du signal triangulaire de modulation), mais l'ondulation du courant est non maîtrisée, dépendante des paramètres de la charge et du point de fonctionnement. La synthèse du régulateur est, en général, basée sur les asservissements linéaires, ce qui introduit un déphasage inhérent aux fonctions de transfert linéaires, à moins d'utiliser un correcteur sophistiqué nécessitant un processeur assez puissant ou une carte analogique très complexe.

Dans tous les cas, la qualité de l'asservissement est étroitement liée à la finesse avec laquelle les paramètres du modèle du système ont été déterminés.

Une deuxième méthode utilisée pour rendre peu sensibles, vis à vis de la fréquence des courants, les performances de l'asservissement consiste à effectuer un changement de base par l'intermédiaire d'une matrice de transformation non linéaire (appelée transformation de Park), ce qui transforme les grandeurs alternatives en composantes continues (constantes) dans la nouvelle base. Les courants étant continus dans cette base, les correcteurs sont déterminés pour assurer des bonnes performances à fréquence nulle.

Cette méthode permet de s'affranchir du problème de la fréquence variable des références pour la synthèse des régulateurs des courants mais la sensibilité aux paramètres du modèle du système reste inchangée par rapport à la méthode précédente.

Le principe de commande par hystérésis est illustré en figure 5. Il consiste à maintenir au moyen de trois comparateurs à hystérésis 51 (dans le cas d'un système triphasé) les courants réels dans la machine à l'intérieur d'une bande de largeur imposée, centrée sur les courants de référence.

L'ondulation du courant est alors imposée mais la fréquence de commutation est libre et variable. Elle dépend, principalement, de la largeur de la bande imposée et des constantes du temps du système à commander (le moteur dans ce cas). Cette méthode présente les avantages suivants :

- un simple comparateur à hystérésis 51 permet d'asservir les courants et générer les commandes des interrupteurs du convertisseur de puissance ;
- l'asservissement est non linéaire, ce qui laisse la possibilité de rendre presque nul le déphasage et de minimiser l'erreur de gain entre les courants de référence et les courants réels ;

- les performances de l'asservissement sont peu sensibles aux paramètres du modèle du système.

En revanche, elles présentent plusieurs inconvénients, liés notamment au mauvais contrôle de la fréquence de commutation des interrupteurs de puissance pilotés par les signaux de commande 44 et 45 :

- les contraintes de commutation sont très importantes au niveau du convertisseur de puissance (échauffements, défauts de commutation, ...) ;
- la variation de fréquence de commutation peut être source de bruits audibles gênants.

Le document de RASHIDI N H "Improved and less load dependent three-phase current-controlled inverter with hysteretic current controllers" IEEE Transactions on Industrial electronics, vol. 42, no. 3, $1^{er}$ juin 1995, pages 325-330, illustre une nouvelle conception d'un comparateur à hystérésis impliqué dans la régulation du courant. Le principe de fonctionnement est le suivant.

Les courants $i_A$, $i_B$ et $i_C$ de la charge sont mesurés et comparés avec les signaux de référence $i^*_A$, $i^*_B$ et $i^*_C$ respectivement. Les erreurs sur les courants $e_A$, $e_B$ et $e_C$ attaquent trois contrôleurs de courant à hystérésis qui pilotent les interrupteurs de puissance du convertisseur à travers un distributeur de signaux. Les signaux de sortie des comparateurs à hystérésis sont nommés respectivement $u_A$, $u_B$ et $u_C$. Les signaux correspondants sont retournés via une boucle à réaction négative, introduisant une fonction du premier ordre, sur les contrôleurs de courant à hystérésis pour chaque phase du convertisseur, ce pour une réduction de l'erreur sur le courant par exemple.

La nouveauté réside donc dans l'utilisation d'une boucle de contre-réaction ajoutée au comparateur à hystérésis avec une fonction du premier ordre dans la boucle qui ajoute au comparateur les caractéristiques d'un correcteur proportionnel et dérivé, d'où les performances qui en découlent. En effet, ce contrôleur de courant à hystérésis avec une boucle interne se comporte comme un contrôleur à correcteur proportionnel et dérivé assurant une réponse rapide du convertisseur aux variations rapides du courant de référence. Ce document décrit donc un procédé de génération d'impulsions employant des comparateurs à hystérésis. Tel n'est pas l'objet de l'invention.

Aucune de ces techniques connues n'est donc satisfaisante. En effet, elles dépendent toutes des paramètres du système à commander, ce qui dégrade bien sûr les avantages attendus de la commande à structure variable, notamment en termes d'universalité.

Par ailleurs, elles sont souvent coûteuses. Elles supposent l'utilisation de moyens électroniques complexes, voire de processeurs très rapides.

D'autres documents, tels que celui écrit par NABAE A ET AL "A novel inverter with sinusoidal voltage and current output"· IEEE Industry Applications Society Annual Meeting, vol. 1, 9 octobre 1992, pages 867-871 proposent un convertisseur de puissance idéal pour la commande de moteurs à courant alternatif à fréquence variable dans lequel on a introduit un filtre actif pour compenser les harmoniques dues à un filtre LC. Dans ce document, on décrit donc une solution consistant à éliminer les oscillations dues au filtre LC placé en sortie du convertisseur de puissance. Pour éliminer ces ondulations liées à la fréquence de résonance du filtre, les auteurs ajoutent un circuit de contre-réaction comme indiqué à la figure 4. Dans ce document, on cherche donc à éliminer les oscillations présentes en sortie d'un système et non à faire entrer le système en oscillation.

Un objectif similaire est décrit dans le brevet US-A-5.543.753. En effet, à nouveau dans ce document, l'étage de puissance à commutateur inclut une boucle de contre-réaction destinée à amortir les oscillations du courant causées par une inductance placée dans cet étage de puissance. Pour ce faire, il est employé un filtre dont la fréquence propre est voisine de la plus haute fréquence du signal audio traité par l'amplificateur complet. Ce filtre élimine les signaux dont les fréquences sont au-dessus de la bande passante du signal audio. En conséquence, ce filtre LC et le filtre tel qu'il sera décrit ci-après dans le cadre de la présente invention, remplissent des objectifs différents, le filtre de la présente invention ayant pour but d'introduire à une haute fréquence particulière un déphasage particulier pour provoquer l'oscillation du système tandis que, dans le document précité, on cherche à éliminer les oscillations présentes.

L'invention a notamment pour objectif de pallier ces inconvénients de l'état de l'art.

Plus précisément, l'invention a pour objectif de fournir une technique de commande de la commutation des convertisseurs statiques dans un système de commande à structure variable qui soit très peu sensible aux variations de paramètres du système à commander, voire pratiquement indépendante de ces derniers, en première approximation.

Un autre objectif de l'invention est de fournir une telle technique, qui soit simple et peu coûteuse à mettre en oeuvre.

L'invention a également pour objectif de fournir une telle technique, qui puisse être implantée sur un circuit intégré.

L'invention a encore pour objectif de fournir une telle technique, qui soit compatible avec tout type de système, et notamment qui puisse être mise en oeuvre aussi bien dans les systèmes monophasés que dans les systèmes polyphasés.

Ces objectifs, ainsi que d'autres qui apparaîtront par la suite, sont atteints, selon l'invention, à l'aide d'un procédé de commande des durées et périodes de conduction d'au moins un commutateur de puissance dans un système de commande à structure variable, système du type comprenant au moins un commutateur actionnable pour délivrer un signal électrique donné correspondant à un système électrique, en fonction d'un signal de commande tenant compte d'un signal d'entrée de référence et d'un signal rebouclé prélevé en sortie dudit système électrique, procédé selon lequel on applique audit signal de commande une oscillation à une fréquence contrôlable, obtenue par l'application d'un filtrage sur ledit signal rebouclé, ledit filtrage étant défini de façon à induire un déphasage de -180° entre le signal rebouclé et filtré d'une part, et le signal d'entrée du système électrique d'autre part, à ladite fréquence contrôlable.

En d'autres termes, selon l'invention, on produit une modulation du signal de commande. On peut alors constater que la chaîne de retour assure conjointement deux fonctions: une fonction d'asservissement, puisque le signal de commande va suivre le signal d'entrée de référence, et une fonction d'oscillation, qui permet de limiter à une fréquence maximale donnée le basculement des commutateurs.

Il est à noter que cette approche est tout à fait nouvelle pour l'homme du métier et que, plus précisément, elle va à l'encontre des préjugés de ce dernier. En effet, les spécialistes des asservissements cherchent toujours, dans de tels systèmes, à éviter les oscillations, considérées comme synonymes d'instabilité.

L'invention concerne également les dispositifs de commande d'au moins un commutateur de puissance mettant en oeuvre un tel procédé. Un tel dispositif comprend donc des moyens d'application audit signal de commande d'une oscillation à une fréquence contrôlable obtenue par l'application d'un filtrage sur ledit signal rebouclé, ledit filtrage étant défini de façon à induire un déphasage de -180° entre le signal rebouclé et filtré d'une part, et le signal d'entrée dudit système électrique d'autre part, à ladite fréquence contrôlable.

Ce résultat est obtenu à l'aide d'une fonction placée entre la sortie et l'entrée de moyens d'amplification. Dans un mode de réalisation particulier, il peut être obtenu à l'aide d'un filtre électronique analogique dont la fréquence propre est voisine de ladite fréquence contrôlable.

Selon les modes de réalisation et les applications, ladite fréquence contrôlable peut être sensiblement constante, ou réglable. Dans ce dernier cas, lesdits moyens de filtrage peuvent par exemple comprendre un filtre à capacités commutés.

Par ailleurs, le dispositif selon l'invention peut s'appliquer aussi bien aux systèmes monophasés qu'aux systèmes polyphasés.

Dans le cas d'un système polyphasé, le dispositif comprend avantageusement, pour chacune des phases :

- un filtre du signal rebouclé, ledit filtrage étant défini de façon à induire un déphasage de -180° entre le signal rebouclé et filtré d'une part, et le signal d'entrée du système électrique d'autre part, à ladite fréquence contrôlable, et

- un filtre passe-bas et passe-haut combiné, le filtre passe-bas alimentant un premier comparateur et le filtre passe-haut alimentant un second comparateur, délivrant ledit signal de commande.

Le dispositif de l'invention peut être réalisé à l'aide de moyens analogiques, ce qui permet d'obtenir un ensemble très rapide et relativement peu coûteux..

Il peut également, notamment dans le cas de systèmes polyphasés, être réalisé à l'aide de moyens analogiques et de moyens de traitement numériques. A nouveau, on peut ainsi obtenir des performances plus élevées qu'avec les systèmes connus complètement numériques.

Avantageusement, le dispositif de l'invention est implanté dans un circuit intégré. Cela est possible, du fait de la relative simplicité de mise en oeuvre de l'invention. On peut ainsi produire un composant unique, trouvant des applications dans de très nombreux domaines.

On notera en effet que, contrairement aux techniques connues, le procédé, le dispositif et le système de l'invention ne supposent pas une connaissance précise des paramètres de la charge à alimenter. En d'autres termes, l'approche de l'invention requiert au plus, en première approximation, la connaissance de l'ordre du système à commander.

L'invention concerne également, bien sûr, les systèmes de commande à structure variable mettant en oeuvre un tel dispositif.

D'autres caractéristiques et avantages de l'invention apparaîtront plus clairement à la lecture de la description suivante d'un mode de réalisation de l'invention, donnés à titre de simple exemple illustratif et non limitatif, et des dessins annexés, parmi lesquels :

- les figures 1 à 5, déjà commentées, sont relatives à l'état de l'art :

  . la figure 1 illustre de façon schématique un système pour lequel peut s'appliquer l'invention ;
  . les figures 2 et 3 présentent deux modes de réalisation connus de la commande d'un système à structure variable correspondant respectivement à un changement de structure par commutation d'une contre-réaction d'état ou par commutation au niveau de l'amplificateur ;
  . la figure 4 illustre le principe de la commande par modulation de largeur d'impulsions, connu en soi ;
  . la figure 5 illustre le principe de la commande par hystérisis, également connu ;

- les figures suivantes concernent l'invention et ses modalités de mise en oeuvre :

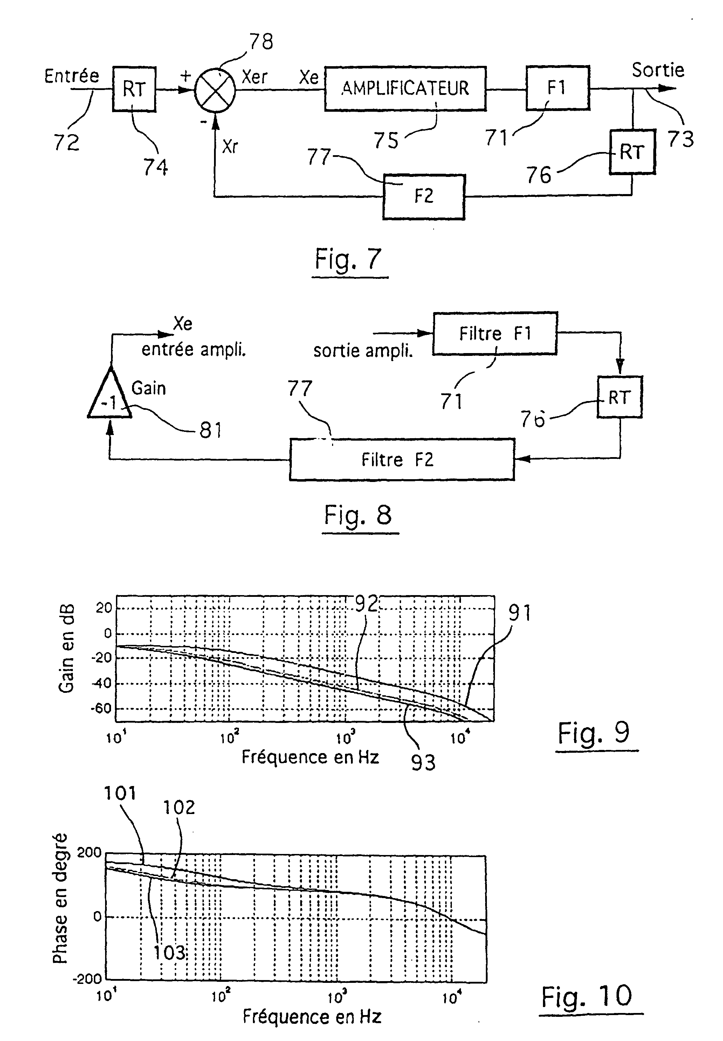

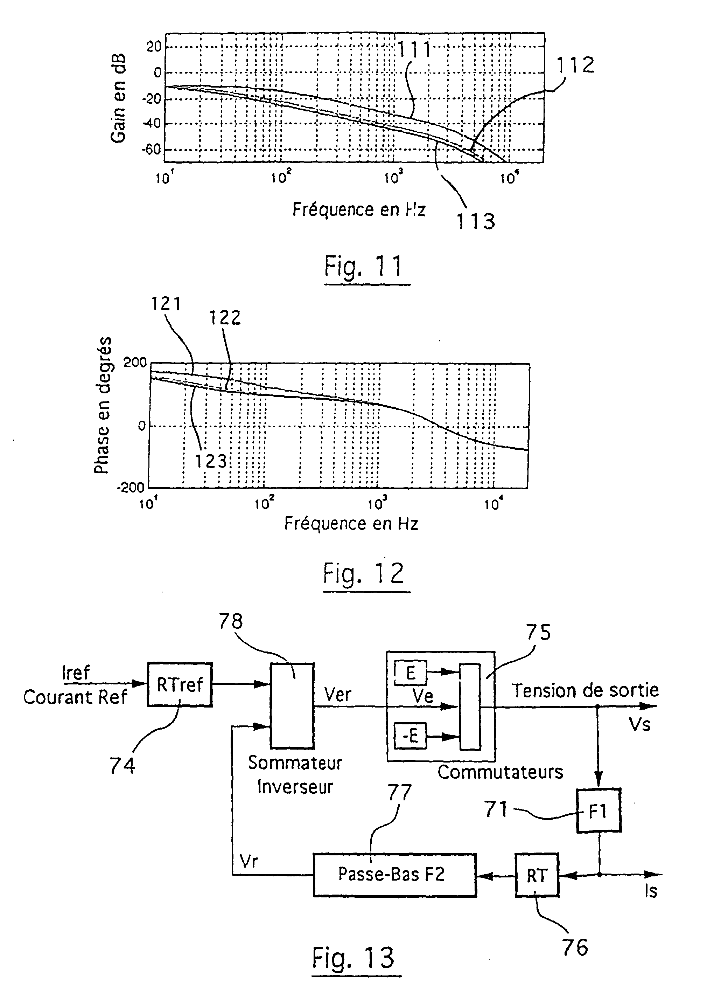

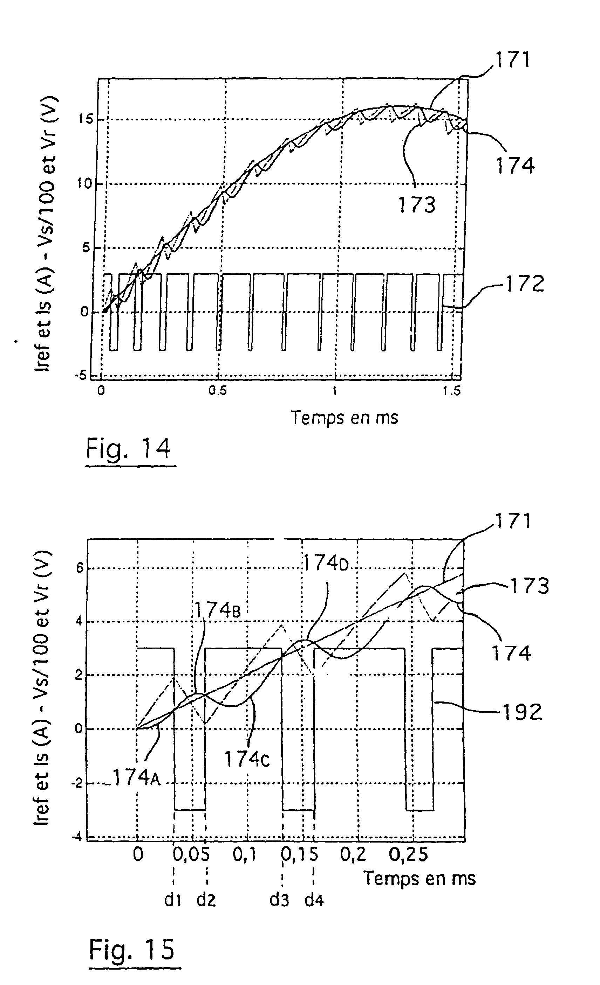

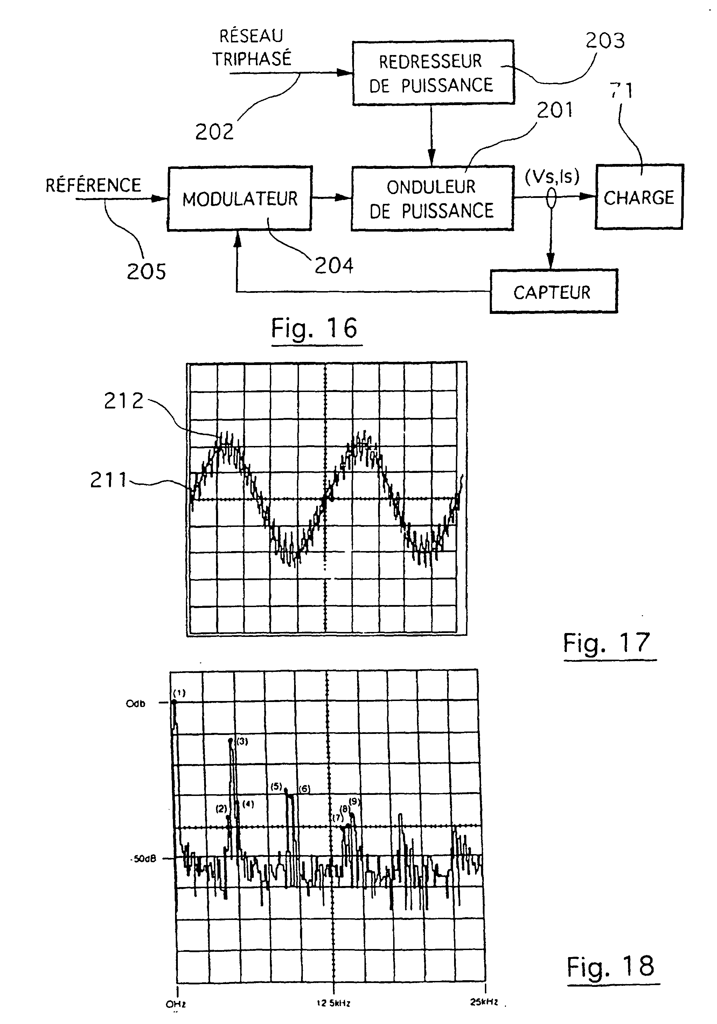

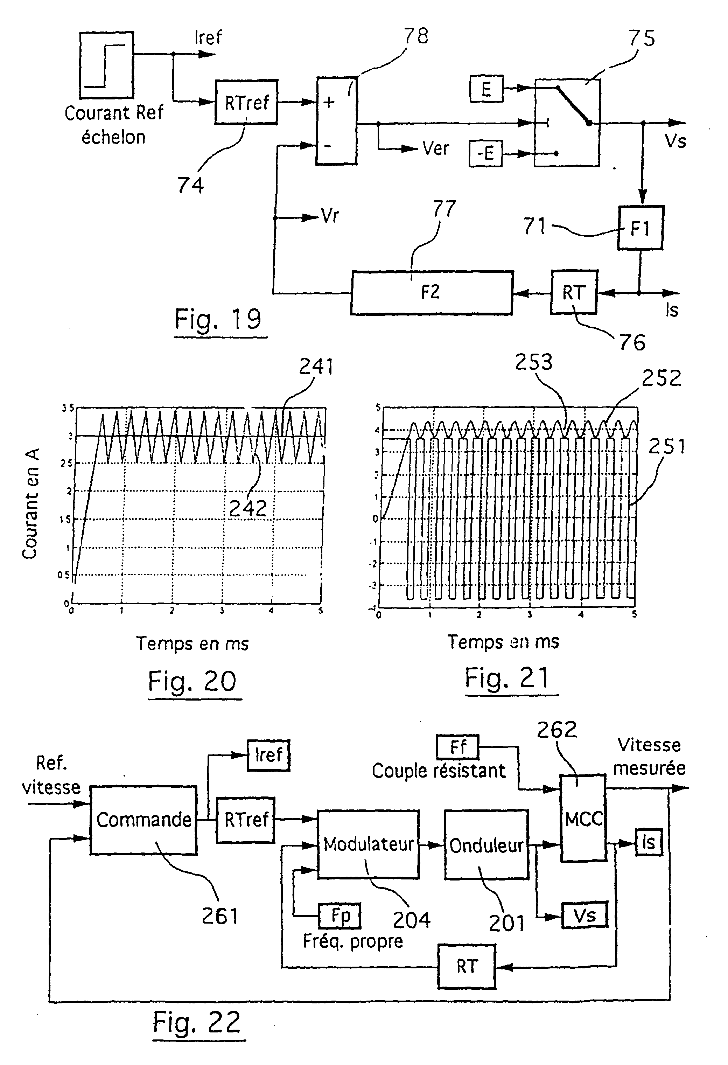

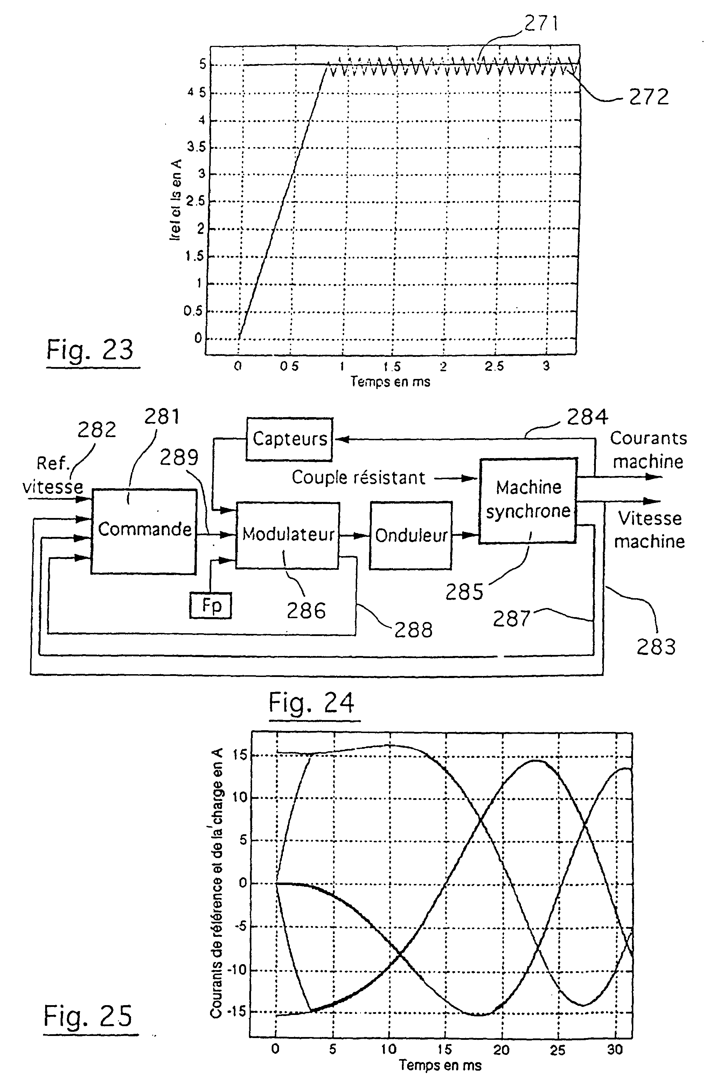

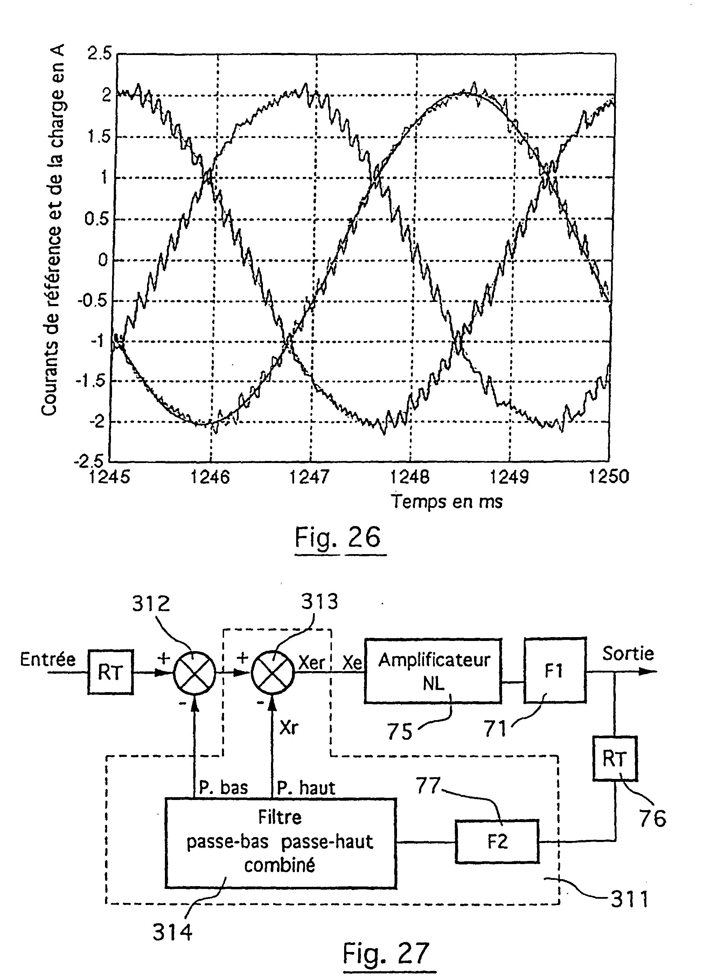

  . les figures 6A et 6B présentent, de façon schématique, le principe général de l'invention, selon deux implantations possibles ;
  . la figure 7 illustre la structure théorique détaillée d'un système selon la figure 6 ;
  . la figure 8 présente le modèle utilisé pour étudier la partie linéaire du système ;
  . les figures 9 à 12 sont des courbes de BODE en gain et en phase pour le modèle de la figure 8 ;
  . la figure 13 présente le système complet selon l'invention ;
  . la figure 14 illustre les signaux obtenus avec le système de la figure 13 ;
  . la figure 15 est un agrandissement d'une portion de la figure 14 ;
  . la figure 16 illustre un exemple de mise en oeuvre du système de l'invention ;
  . la figure 17 présente les signaux relevés sur le système de la figure 16 ;
  . la figure 18 présente le spectre du courant dans la charge du système de la figure 16 ;
  . la figure 19 illustre un modèle de simulation pour l'analyse de l'attaque du modulateur ;
  . les figures 20 et 21 illustrent les signaux obtenus avec le modèle de la figure 19 ;
  . la figure 22 présente le cas de l'application du modulateur dans un modèle de commande d'un moteur à courant continu ;
  . la figure 23 illustre les courants relevés dans le cas de la figure 22 ;
  . la figure 24 présente un mode de réalisation de l'invention destiné aux charges triphasées ;
  . les figures 25 et 26 illustrent les courants obtenus dans le cas de la figure 24 ;
  . la figure 27 présente un autre mode de réalisation, pour une phase, dans le cas d'une charge polyphasée.

**1. Principe de l'invention**

Les figures 6A et 6B illustrent le principe général de l'invention. La charge 61 à alimenter en puissance électrique reçoit classiquement cette puissance d'un amplificateur 62, dont les interrupteurs de puissance sont pilotés par le signal d'erreur 63.

Comme cela a été déjà indiqué, la nouveauté de l'invention repose principalement sur la génération de ce signal d'erreur 63. En d'autres termes, l'invention propose une nouvelle technique de modulation d'impulsions, présentant de nombreux avantages.

Ce signal 63 est en effet obtenu par la création d'une oscillation produite par l'insertion d'un filtre 64 sur la chaîne de retour, dans le cas de la figure 6A. Le signal 63 est donc la différence entre le signal de référence 65 et le signal filtré 66.

Dans le cas de la figure 6B, le filtre 64 est placé avant l'amplificateur 62.

Ainsi, on obtient alors un signal d'erreur modulé à une fréquence voisine de la fréquence propre du filtre 64, de façon pratiquement indépendante des caractéristiques de la charge 61.

## 2. Exemple d'un modulateur

### 2.1. Synoptique d'un modulateur

La figure 7 illustre la structure théorique détaillée d'un système mettant en oeuvre le principe illustré en figure 6. Il forme donc un modulateur permettant le contrôle d'un fort courant basse fréquence dans une charge électrique 71, en fonction d'un signal de référence 72, image du courant à produire dans cette charge.

Il est construit sur le modèle d'un système asservi et est donc équipé d'une chaîne directe et d'une chaîne de retour. Le signal d'entrée est donc le courant de référence 72, et le signal de sortie est le courant fort 73 traversant la charge 71.

La chaîne directe est constituée, de gauche à droite, des fonctions de transfert $R_T$ 74, d'un amplificateur en tension de puissance 75 non linéaire et de la fonction *F1* 71.

La chaîne de retour, de droite à gauche, est constituée des fonctions de transfert $R_T$ 76 et *F2* 77 et joue en fait deux rôles, conjointement, qui vont être décrits plus loin.

La fonction $R_T$ 74 est une transimpédance réelle et positive.

La fonction *F1* 71 est représentative de la charge électrique, qui se traduit mathématiquement, en première approximation, par une fonction de transfert de type passe-bas du premier ordre. Elle n'introduit pas de déphasage en très basse fréquence. Sa fréquence de coupure est, en pratique, de quelques centaines de Hertz.

La fonction *F2* est représentative d'un filtre passe-bas du second ordre. Elle n'introduit pas de déphasage en très basse fréquence. Sa fréquence propre est supérieure à quelques kilo Hertz.

Les signaux d'entrée 72 et de sortie 73, attaquant chacun une transimpédance $R_T$, les deux entrées du comparateur 78 sont physiquement homogènes à des tensions.

L'amplificateur 75 est de type non-linéaire. Il reçoit un signal dont la nature physique est donc une tension. Il délivre sur sa sortie une tension fonction du signe de celle appliquée à l'entrée.

Le comparateur 78, localisé entre la fonction de transfert $R_T$ d'entrée 74 et l'amplificateur 75, joue deux rôles : celui de détecteur d'erreur et celui de déphaseur. Ces deux rôles vont être justifiés plus loin.

Par la suite, les signaux présents sur l'entrée négative du comparateur, la sortie du comparateur, l'entrée de l'amplificateur, seront notés respectivement $X_r$, $X_{er}$ et $X_e$, les indices étant significatifs de "retour", "erreur" et "entrée".

### 2.2. Principe de fonctionnement du modulateur

La chaîne de retour est employée conjointement dans deux fonctions électroniques.

En premier lieu, la chaîne de retour réalise une contre-réaction de la sortie 73 sur l'entrée du $X_r$ du comparateur 78. Elle permet d'obtenir sur la sortie 73 un signal à l'image du signal présent sur l'entrée positive du comparateur, qui est proportionnel, au coefficient $R_T$ près, au signal d'entrée 72 du modulateur.

Dans ce cas, le comparateur 78 voit, sur son entrée négative, un signal qui tend en permanence vers le signal appliqué sur son entrée positive, signal dit de référence.

Le comparateur associé à la chaîne de retour permet l'asservissement du courant de sortie en fonction du courant d'entrée.

En second lieu, pour une fréquence particulière, la chaîne de retour introduit une rotation de phase de -180 degrés entre la sortie de l'amplificateur 75 et l'entrée négative $X_r$ du comparateur 78. Cette rotation de phase est bien sûr dépendante et fortement influencée par le filtre F2 77.

Cette rotation de phase est de 0° modulo 360 entre la sortie de l'amplificateur 75 et son entrée.

Le modèle illustré en figure 8 est employé pour obtenir des résultats quant aux déphasages et aux atténuations apportés par les filtres F1 71, F2 77, $R_T$ 76 et au comparateur (gain-1) 81 :

Ce modèle permet de tracer les courbes de BODE en gain et phase (figures 9 à 12) du circuit exempt de l'amplificateur 75. Les valeurs numériques de base prises en compte, à titre d'exemple, sont les suivantes :

$$R = 4, 23 \ \Omega$$

$$R_T = 1,35 \ \text{V/A}$$

$$\xi = \text{ksi} = 0,707$$

En effet, pour juger du rôle du filtre F2 sur la fréquence particulière à laquelle le déphasage est de 0 degré modulo 360 degrés, on peut observer le déphasage obtenu. Trois valeurs de L qui modifient *F1* 71 sont employées :

- 9,0mH (courbes 91, 101, 111 et 121) soit 27,3mH-67 %
- 27,3mH (courbes 92, 102, 112 et 122)
- 37,5mH (courbes 93, 103, 113 et 123) soit 27,3mH+37 %

Pour *Fp* égale à 10kHz les tracés de BODE sont illustrés en figures 9 et 10. De même, pour $F_p$ égale à 3,5kHz les tracés de BODE sont illustrés en figures 11 et 12.

Ces résultats confirment dans les six cas (variations de $F_p$, variations de $L$) que la fréquence particulière (déphasage de 0 degré modulo 360 degrés) est très voisine de la fréquence propre du filtre du second ordre.

Cette fréquence est donc, pour les valeurs numériques choisies, peu sensible aux paramètres de la charge électrique.

L'amplificateur non-linéaire 75 permet de remplir la condition de gain. Les conditions d'oscillation sont respectées.

### 2.3. Le modulateur

Cette fois, l'entrée référence est exploitée. Le système, illustré en figure 13, réalise en simultanéité l'asservissement du courant de sortie en fonction du signal de référence basse fréquence d'entrée et la commande de la fréquence d'oscillation $f_{osc}$.

L'entrée positive du comparateur 78 reçoit une information sinusoïdale. En fait, le courant de référence à reproduire peut être de forme quelconque. Le cas particulier décrit ci-dessous s'applique à certaines applications, de type sinusoïdales. Il illustre les points d'analyse qui vont suivre.

Le courant $I_{réf}$ est donc choisi sinusoïdal : $I_{réf}=I.\sin(\omega_s t)$. Les paramètres suivants sont employés pour illustrer la suite :

> $L$ = 5mH
> R = 15$\Omega$
> $\tau 1$ = 333µs
> $f_{cl}$ = 478Hz
> $F_p$ = 10kHz
> $I$ = 16A
> $f_s$ = 200Hz
> $R_T$ = 1V/A
> $E$ = 300V
> $\xi$ = 0,707

Les différents signaux mis en jeu vont avoir les allures illustrées en figure 14.

Compte tenu de la rotation de phase totale variant de 0 degré à -450 degrés (extrêmes de -90 degrés, 0 degré, -180 degrés, avec *F1, $R_T$, F2*, entrée négative du comparateur), depuis la sortie de l'amplificateur non-linéaire jusqu'à son entrée, il existe donc une fréquence particulière pour laquelle le système est oscillatoire.

Par ailleurs, la boucle d'asservissement permet d'obtenir sur l'entrée négative du comparateur un signal qui tend en permanence vers le signal appliqué sur son entrée positive. Les transimpédances R$_{Tréf}$ et R$_T$ étant supposées de valeurs identiques, le courant $I_S$ tend en permanence vers le courant de référence $I_{réf}$.

Sur la figure 14, les signaux, $I_{réf}$ de référence (171), Vs de sortie de l'amplificateur (172), $I_s$ (173), V$_r$ de retour sur le comparateur (174), montrent ce fonctionnement. Un grossissement de cette figure (figure 15) permet de mieux visualiser ce résultat.

### 3. Mise en oeuvre

### 3.1. Essais expérimentaux du modulateur

### *3.1.1. Réalisation pratique du modulateur*

Pour faire ces essais, une carte électronique a été réalisée. Sur cette carte, il est possible de piloter la fréquence propre du filtre passe-bas du second ordre $F_2$.77. Ce pilotage de la fréquence propre est réalisé grâce à l'emploi d'un filtre à capacités commutées.

### *3.1.2. Synoptique d'application du modulateur*

Ce synoptique est présenté en figure 16. Pour faire les essais, les commutateurs sont localisés au sein d'un onduleur de puissance 201 alimenté depuis le réseau triphasé 202, via un redresseur de puissance 203. Le modulateur 204 est attaqué par le signal de référence 205 qui est une tension correspondant au courant à reproduire multiplié par la valeur de la transimpédance $R_T$ du capteur.

### *3.1.3. Essais sur charge résistive et inductive*

Pour l'expérience, les paramètres sont les suivants :

> $R$ = 4,23$\Omega$
> $L$ = 27,3mH
> $\tau 1$ = 6,45ms
> $R_T$ = 1,35V/A $E$=180V
> $F_p$ = 3,64kHz
> $I$ courant crête = 3A
> $f_s$ fréquence courant = 200Hz

Le paramètre $R_T$ déjà rencontré dans l'analyse théorique est la transimpédance du capteur de courant. Le courant "prélevé", dans la ligne d'alimentation de la charge, est "amplifié" du coefficient, égal à $R_T$, fixé à ici 1,35V/A.

Le signal de référence 211 du modulateur et le signal 212 en aval du capteur de courant sont présentés en figure 17.

Ces résultats pratiques montrent le bon suivi du signal de référence 211 par le signal 212 en aval du capteur. Les deux signaux sont, pour le premier, le courant de référence amplifié du coefficient $R_T$, pour le second, le courant dans la charge multiplié par le même coefficient $R_T$. En conséquence, le courant dans la charge suit le courant de référence.

Le spectre du courant dans la charge, ainsi obtenu, est présenté en figure 18.

Ce spectre révèle un fondamental à 200Hz (raie numéro 1) puis un bruit spectral jusqu'à 4200Hz (raie numéro 2).

Une raie de forte amplitude apparaît à 4490Hz (raie numéro 3). Avec les deux autres raies de part et d'autre, il y a là un groupe spectral indiquant indirectement la fréquence moyenne d'oscillation, donc de consommation des interrupteurs de puissance.

*3.1.4. Sensibilité de modulauteur aux variations de paramètres*

La simulation de l'attaque du modulateur par un échelon montre que le modulateur tend rapidement vers le courant ciblé et que la fréquence d'oscillation se stabilise à une valeur donnée.

Le modèle de simulation, traité au moyen d'un logiciel approprié, est illustré en figure 19.

Les signaux typiques obtenus suite à l'attaque par un échelon de courant sont présentés en figures 20 et 21 :

    241 : Iréf
    242 : Is
    251 : Vs/50
    252 : Vr
    253 : Vréf

Dans les plages de variation accordées aux différents paramètres, l'oscillation est peu sensible aux paramètres électriques de la charge. Les paramètres électriques de la charge 71 n'ont donc pas besoin d'être connus. Seul un très vague ordre de grandeur est à connaître pour fixer les paramètres du filtre F2 77.

**4. Exemples d'applications**

4.1. Régulation du courant d'un moteur à courant continu

Un moteur à courant continu peut être assimilé à une force électromotrice associée à une inductance ($L$) et une résistance ($R$).

Dans ce cas, la source d'alimentation commutée est symétrique ($+E, -E$), la tension équivalente commutée aux bornes de l'impédance ($R, L$) est dissymétrique.

Les résultats théoriques précédents ont montré que les variations de la tension d'alimentation symétrique n'influent qu'extrêmement peu tant que la tension d'alimentation ne descend pas en dessous d'une valeur limite. Pour une source dissymétrique, le modulateur s'adapte également.

Cette adaptation du modulateur est illustrée en figure 22.

En fonction de la vitesse ciblée, la commande 261 génère la valeur du courant de référence qui doit circuler dans l'enroulement de la machine à courant continu (MCC) 262. Un étage de protection limite ce courant au démarrage. Ce courant limite est choisi arbitrairement, dans l'exemple qui suit, à 5A.

La figure 23 illustre les courants de référence (271) et dans la charge (272).

4.2. Contrôle du courant d'un moteur triphasé synchrone

Le modulateur de l'invention s'adapte également aux charges triphasées. Sur une machine synchrone, une simulation du fonctionnement à partir du synoptique de la figure 24 est proposée.

La commande 281 élabore les courants de référence en fonction de la vitesse de référence 282, de la vitesse 283 de la machine 285 et des courants mesurés 284 qui ont subi un pré-traitement par filtrage au sein du modulateur même.

La commande 281 ne connaît pas les paramètres électriques de la machine 285. Le modulateur 286 non plus.

Au démarrage de la machine, les courants de référence et les courants dans la machine simulés sont présentés sur la figure 25.

L'observation des courants de la machine, contrôlés par le modulateur triphasé 286, montre que ces courants rattrapent puis suivent leurs références respectives (voir figure 26, dans le cas d'une grande vitesse).

4.3. Contrôle du courant dans un système polylphasé

En polyphasé, et dans le cas d'asservissement de courants, la structure pour chaque phase peut être modifiée comme illustré en figure 27.

Dans ce cas, le modulateur peut être limité au tracé en pointillés 311. Le modulateur commande la fréquence d'oscillation et délivre une image filtrée des courants mesurés au premier comparateur d'entrée.

Le filtre F2 77 peut aussi être placé entre la sortie passe-haut d'un filtre combiné 314 et l'entrée négative du second comparateur 313, puisque ce filtre agit en haute fréquence. Le filtre F2 peut également être placé entre la sortie du second comparateur 313 et l'entrée de l'amplificateur 75.

Le modulateur est encore dans ce cas réalisable totalement en électronique analogique.

Le premier comparateur 312 peut être réalisé en électronique numérique avec ou sans processeur. Les signaux à traiter par l'éventuel processeur sont alors de basses fréquences.

Pour des commandes moteurs, l'algorithme exécuté par ce processeur hypothétique n'a pas besoin de connaître les paramètres électriques de la charge.

Dans le cas des systèmes triphasés, la décomposition du comparateur d'entrée en deux comparateurs 312 et 313 permet de comparer les grandeurs de référence et de retour pré filtrées dans les repères diphasés de Concoordia et de Park, connus en électrotechnique. Il est ainsi possible de profiter d'un avantage de la MLI triphasée, à savoir la surmodulation des amplitudes des tensions.

**5. Généralisation**

L'invention propose donc une structure employant un amplificateur non linéaire de type relais sans hystérésis, associé à deux modules dont les fonctions sortie/entrée correspondent respectivement au système à commander (F1) et au module nouveau de l'invention (F2). Cette structure est capable d'asservir un signal de référence dont le spectre basse fréquence est quelconque et de commander conjointement une oscillation de plus haute fréquence superposée au signal asservi.

Cette oscillation permet, selon l'invention, la commutation d'un ou plusieurs interrupteurs de puissance employés dans le cadre d'applications avec ou sans force contre-électromotrice, monophasées ou polyphasées.

Dans cette structure, la connaissance des paramètres électriques de la charge n'est pas nécessaire.

Cette structure est totalement réalisable en électronique analogique. Elle peut également être mixte (analogique et numérique).

**Revendications**

1. Procédé de commande d'au moins un commutateur de puissance dans un système de commande à structure variable, système du type comprenant au moins un commutateur actionnable pour délivrer un signal électrique donné correspondant à un système électrique (21), en fonction d'un signal de commande (63) tenant compte d'un signal d'entrée de référence (65) et d'un signal rebouclé (66) prélevé en sortie dudit système électrique, **caractérisé en ce qu'**on applique audit signal de commande (63) une oscillation à une fréquence contrôlable, obtenue par l'application d'un filtrage (F2) sur ledit signal rebouclé, prélevé en sortie du ou des commutateurs, ledit filtrage (F2) étant défini de façon à induire un déphasage de - 180° entre le signal rebouclé (66), prélevé en sortie du ou des commutateurs et filtré d'une part, et le signal d'entrée dudit système électrique d'autre part, à ladite fréquence contrôlable voisine de la fréquence propre d'un filtre (F2) des moyens de filtrage.

2. Dispositif de commande d'au moins un commutateur de puissance dans un système de commande à structure variable, système du type comprenant au moins un commutateur actionnable pour délivrer un signal électrique donné correspondant à un système électrique (21), en fonction d'un signal de commande (63) tenant compte d'un signal d'entrée de référence (65) et d'un signal rebouclé (66) prélevé en sortie dudit système électrique, **caractérisé en ce qu'**il comprend des moyens d'application audit signal de commande (63) d'une oscillation à une fréquence contrôlable obtenue par l'application d'un filtrage (F2) sur ledit signal rebouclé, prélevé en sortie du ou des commutateurs, ledit filtrage (F2) étant défini de façon à induire un déphasage de - 180° entre le signal rebouclé (66), prélevé en sortie du ou des commutateurs et filtré d'une part, et le signal d'entrée dudit système électrique d'autre part, à ladite fréquence contrôlable voisine de la fréquence propre d'un filtre (F2) des moyens de filtrage.

3. Dispositif selon l'une quelconque des revendications 1 et 2, **caractérisé en ce que** ladite fréquence contrôlable est sensiblement constante.

4. Dispositif selon l'une quelconque des revendications 1 à 3, **caractérisé en ce que** ladite fréquence contrôlable est réglable.

5. Dispositif selon la revendication 4, **caractérisé en ce que** lesdits moyens de filtrage sont agencés pour pouvoir utiliser un filtre à capacités commutées.

6. Dispositif selon l'une quelconque des revendications 2 à 5, **caractérisé en ce que** ledit système électrique est alimenté par une source de puissance monophasée.

7. Dispositif selon l'une quelconque des revendications 2 à 6, **caractérisé en ce que** ledit système électrique est alimenté par une source de puissance polyphasée.

8. Dispositif selon la revendication 7, **caractérisé en ce qu'**il est alimenté par une source de puissance polyphasée et **en ce qu'**il comprend, pour chacune des phases :

   - un filtre du signal rebouclé, ledit filtrage étant défini de façon à induire un déphasage de -180° entre le signal rebouclé, prélevé en sortie du ou des commutateurs et filtré d'une part, et le signal d'entrée dudit système électrique d'autre part, à ladite fréquence contrôlable, et
   - un filtre passe-bas et passe-haut combiné, le filtre passe-bas alimentant un premier comparateur et le filtre passe-haut alimentant un second comparateur, délivrant ledit signal de commande.

9. Dispositif selon l'une quelconque des revendications 2 à 8,
**caractérisé en ce qu'**il est réalisé à l'aide de moyens analogiques.

10. Dispositif selon l'une quelconque des revendications 7 et 8,
**caractérisé en ce qu'**il est réalisé à l'aide de moyens analogiques et de moyens de traitement numériques.

11. Dispositif selon l'une quelconque des revendications 2 à 10,
**caractérisé en ce qu'**il est implanté dans un circuit intégré.

12. Système de commande à structure variable,
**caractérisé en ce qu'**il comprend un dispositif selon l'une quelconque des revendications 2 à 11.

**Patentansprüche**

1. Verfahren zur Steuerung mindestens eines Leistungsschalters in einem Steuersystem mit variabler Struktur, und zwar in einem System, das mindestens einen betätigbaren Schalter umfasst, um ein bestimmtes, einem elektrischen System (21) zugeordnetes elektrisches Signal abzugeben in Abghängigkeit von einem Steuersignal (63), wobei ein Eingangs-Referenzsignal (65) und ein am Ausgang dieses elektrischen Systems abgenommenes, rückgekoppeltes Signal berücksichtigt werden, **dadurch gekennzeichnet, dass** auf das genannte Steuersignal (63) eine Schwingung mit steuerbarer Frequenz angewendet wird, die durch Filtern (F2) des genannten am Ausgang des oder der Schalter abgenommenen rückgekoppelten Signals erhalten wird, wobei das Filtern (F2) so definiert ist, dass eine Phasenverschiebung um - 180° zwischen dem am Ausgang des oder der Schalter abgenommenen rückgekoppelten und gefilterten Signals (66) zum einen und dem Eingangssignal des genannten elektrischen Systems zum anderen bei der genannten steuerbaren Frequenz herbeigeführt wird, die in der Nähe der Eigenfrequenz eines Filters (F2) der Filtermittel liegt.

2. Vorrichtung zur Steuerung mindestens eines Leistungsschalters in einem Steuersystem mit variabler Struktur, und zwar in einem System, das mindestens einen betätigbaren Schalter umfasst, um ein bestimmtes, einem elektrischen System (21) zugeordnetes elektrisches Signal abzugeben in Abhängigkeit von einem Steuersignal (63) , wobei ein Eingangs-Referenzsignal (65) und ein am Ausgang des genannten elektrischen Systems abgenommenes rückgekoppeltes Signal berücksichtigt werden, **dadurch gekennzeichnet,dass** es Mittel umfasst, um auf das genannte Steuersignal (63) eine Schwingung mit steuerbarer Frequenz anzuwenden, die man durch das Filtern (F2) des genannten am Ausgang des oder der Schalter abgenommenen rückgekoppelten Signals erhält, wobei das genannte Filtern (F2) so definiert ist, dass dadurch eine Phasenverschiebung um - 180° zwischen dem am Ausgang des oder der Schalter abgenommenen rückgekoppelten und gefilterten Signals (66) zum einen und dem Eingangssignal des genannten elektrischen Systems zum anderen bei der genannten steuerbaren Frequenz herbeigeführt wird, die in der Nähe der Eigenfrequenz eines Filters (F2) der Filtermittel liegt.

3. Vorrichtung nach einem der Ansprüche 1 oder 2, **dadurch gekennzeichnet, dass** die genannte steuerbare Frequenz im wesentlichen konstant ist.

4. Vorrichtung nach einer der Ansprüche 1 bis 3, **dadurch gekennzeichnet, dass** die genannte steuerbare Frequenz regelbar ist.

5. Vorrichtung nach Anspruch 4, **dadurch gekennzeichnet, dass** die genannten Filtermittel so eingerichtet, dass ein umschaltbares Filter verwendet werden kann.

6. Vorrichtung nach einem der Ansprüche 2 bis 5, **dadurch gekennzeichnet, dass** das genannte elektrische System durch eine einphasige Leistungsquelle gespeist wird.

7. Vorrichtung nach einem der Ansprüche 2 bis 6, **dadurch gekennzeichnet, dass** das genannte elektrische System durch eine mehrphasige Leistungsquelle gespeist wird.

8. Vorrichtung nach Anspruch 7, **dadurch gekennzeichnet, dass** sie durch eine mehrphasige Leistungsquelle gespeist wird und dass sie für jede einzelne Phase folgendes umfasst:

   - ein Filter für das rückgekoppelte Signal, wobei das Filtern so definiert ist, dass dadurch eine Phasenverschiebung um - 180° zwischen dem am Ausgang des oder der Schalter abgenommenen und gefilterten rückgekoppelten Signals zum einen und dem Eingangssignal des genannten elektrischen Systems zum anderen bei der genannten steuerbaren Frequenz herbeigeführt wird und
   - ein kombiniertes Tiefpass- und Hochpassfilter, das das genannte Steuersignal abgibt, wobei das Tiefpassfilter einen ersten Komparator und das Hochpassfilter einen zweiten Komparator speist.

9. Vorrichtung nach einem der Ansprüche 2 bis 8, **dadurch gekennzeichnet , dass** sie mit Hilfe von analogen Mitteln realisiert ist.

10. Vorrichtung nach einem der Ansprüche 7 oder 8, **dadurch gekennzeichnet,dass** sie mit Hilfe von analogen Mitteln und digitalen Verarbeitungsmitteln realisiert ist.

11. Vorrichtung nach einem der Ansprüche 2 bis 10 **dadurch gekennzeichnet, dass** sie in einen integrierten Schaltkreis eingebaut ist.

12. Steuersystem mit variabler Struktur, **dadurch gekennzeichnet, dass** es eine Vorrichtung nach einem der Ansprüche 2 bis 11 umfasst.


**Claims**

1. Method for controlling at least one power switch in a control system with variable structure, which system is of the type comprising at least one switch that can be actuated to supply a given electrical signal corresponding to an electrical system (21), as a function of a control signal (63) taking account of a reference input signal (65) and of a looped signal (66) taken at the output of the said electrical system, **characterised in that** oscillation at a controllable frequency, obtained by the application of filtering (F2) to the said looped signal, taken at the output of the switch or switches, is applied to the said control signal (63), the said filtering (F2) being defined so as to induce a phase shift of -180° between the looped signal (66), taken at the output of the switch or switches and filtered, on the one hand, and the input signal for the said electrical system, on the other hand, at the said controllable frequency close to the inherent frequency of a filter (F2) of the filtering means.

2. Device for controlling at least one power switch in a control system with variable structure, which system is of the type comprising at least one switch that can be actuated to supply a given electrical signal corresponding to an electrical system (21), as a function of a control signal (63) taking account of a reference input signal (65) and of a looped signal (66) taken at the output of the said electrical system, **characterised in that** it comprises means for applying oscillation at a controllable frequency, obtained by the application of filtering (F2) to the said looped signal, taken at the output of the switch or switches, to the said control signal (63), the said filtering (F2) being defined so as to induce a phase shift of -180° between the looped signal (66), taken at the output of the switch or switches and filtered, on the one hand, and the input signal for the said electrical system, on the other hand, at the said controllable frequency close to the inherent frequency of a filter (F2) of the filtering means.

3. Device according to any one of Claims 1 and 2, **characterised in that** the said controllable frequency is essentially constant.

4. Device according to any one of Claims 1 to 3, **characterised in that** the said controllable frequency is adjustable.

5. Device according to Claim 4, **characterised in that** the said filtering means are equipped to be able to use a filter with switched capacitances.

6. Device according to any one of Claims 2 to 5, **characterised in that** the said electrical system is powered by a single phase power source.

7. Device according to any one of Claims 2 to 6, **characterised in that** the said electrical system is powered by a multiple phase power source.

8. Device according to Claim 7, **characterised in that** it is powered by a multiple phase power source and **in that** it comprises, for each of the phases:

   - a filter for the looped signal, the said filtering being defined so as to induce a phase shift of -180° between the looped signal, taken at the output of the switch or switches and filtered, on the one hand, and the input signal for the said electrical system, on the other hand, at the said controllable frequency, and
   - a combined low-pass and high-pass filter, the low-pass filter feeding a first comparator and the high-pass filter feeding a second comparator, supplying the said control signal.

9. Device according to any one of Claims 2 to 8, **characterised in that** it is implemented with the aid of analogue means.

10. Device according to any one of Claims 7 and 8, **characterised in that** it is implemented with the aid of analogue means and of digital processing means.

11. Device according to any one of Claims 2 to 10, **characterised in that** it is incorporated in an integrated circuit.

12. Control system with variable structure, **characterised in that** it comprises a device according to any one of Claims 2 to 11.

Fig. 1

Fig. 2

Fig. 3

47 ⌇⎍⌇

Iref
41
+
⊗
−
I
42
CORRECTEUR
43
⊗
⎍⌐
46
44
45

Fig. 4

41
+
⊗
−
I
42
⎍⌐
51
44
45

Fig. 5

63
65
+
⊗
−
AMPLI.
62
CHARGE
61
66
FILTRE
64

Fig. 6A

63
65
+
⊗
−
64
FILTRE
AMPLI.
62
CHARGE
61

Fig. 6B

Fig. 7

Fig. 8

Fig. 9

Fig. 10

Fig. 11

Fig. 12

Fig. 13

Fig. 14

Fig. 15

RÉSEAU
TRIPHASÉ

REDRESSEUR
DE PUISSANCE

203

201

71

202

RÉFÉRENCE

MODULATEUR

ONDULEUR
DE PUISSANCE

(Vs,Is)

CHARGE

205

204

CAPTEUR

Fig. 16

212

211

Fig. 17

0db

(1)

(3)

(5)    (6)

(2)   (4)

(8)(9)

(7)

-50dB

0Hz

12 5kHz

25kHz

Fig. 18

17

Fig. 19

Temps en ms

Fig. 20

Temps en ms

Fig. 21

Fig. 22

Fig. 23

Fig. 24

Fig. 25

Fig. 26

Fig. 27